# EUROPEAN PATENT SPECIFICATION

(11) **EP 3 882 288 B1**
(45) Date of publication and mention of the grant of the patent: **26.06.2024**
(21) Application number: 19884739.4
(22) Date of filing: 15.11.2019
(51) Int. Cl.: C08F 290/06, G02B 6/44, C03C 25/1065, C03C 25/326, C03C 25/42, C03C 25/6226, C08K 9/06, C09D 4/00, C09D 4/06, C03C 25/106, C08K 3/36

(54) **RESIN COMPOSITION, OPTICAL FIBER AND METHOD FOR MANUFACTURING OPTICAL FIBER**
HARZZUSAMMENSETZUNG, OPTISCHE FASER UND VERFAHREN ZUR HERSTELLUNG EINER OPTISCHEN FASER
COMPOSITION DE RÉSINE, FIBRE OPTIQUE ET PROCÉDÉ DE FABRICATION DE FIBRE OPTIQUE

(30) Priority: 16.11.2018 JP 2018215714
(43) Date of publication of application: 22.09.2021
(73) Proprietor: SUMITOMO ELECTRIC INDUSTRIES, LTD., Osaka-shi, Osaka 541-0041 (JP)
(72) Inventor: HAMAKUBO Katsushi, Osaka-shi, Osaka 541-0041 (JP)
(74) Representative: Hoffmann Eitle
(86) International application number: PCT/JP2019/044950
(87) International publication number: WO 2020/101029

(56) References cited:
- WO-A1-2009/142237
- JP-A- H08 134 156
- JP-A- 2006 137 795
- JP-A- 2007 131 698

## Description

### Technical Field

The present disclosure relates to a resin composition, an optical fiber, and a method for manufacturing an optical fiber.

### Background Art

An optical fiber has generally a coating resin layer for protecting a glass fiber which is an optical transmission medium. The optical fiber has been required to have excellent lateral pressure characteristics in order to reduce an increase in transmission loss induced by micro-bend generated when lateral pressure is applied to the optical fiber.

For example, in Patent Literature 1, it has been investigated to improve the lateral pressure characteristics of the optical fiber by forming a resin layer using an ultraviolet ray curable resin composition containing a filler made of synthetic silica.

### Citation List

### Patent Literature

[Patent Literature 1] JP 2014-219550 A

### Summary of Invention

The resin composition according to one aspect of the present disclosure includes a base resin containing a urethane (meth)acrylate oligomer, a monomer, and a photopolymerization initiator, and surface-modified inorganic oxide particles, which are inorganic oxide particles, the surface of which is treated with a silane compound having an alkyl group having 1 or more and 8 or less carbon atoms or a phenyl group, wherein the content of the surface-modified inorganic oxide particles is 1% by mass or more and 60% by mass or less based on the total amount of the resin composition, and the amount of surface modification on the surface-modified inorganic oxide particles is 0.15 mg/m² or more, wherein the amount of surface modification is calculated from the specific surface area of the inorganic oxide particles and the ratio of the silane compound by the following formula: amount of surface modification (mg/m2) = ratio of the silane compound / specific surface area of the inorganic oxide particles, wherein the ratio of the silane compound is measured by thermogravimetric/differential thermal analysis (TG/DTA) based on the weight change of the surface-modified inorganic oxide particles, and the specific surface area of the inorganic oxide particles is measured by a nitrogen absorption BET method.

### Brief Description of Drawings

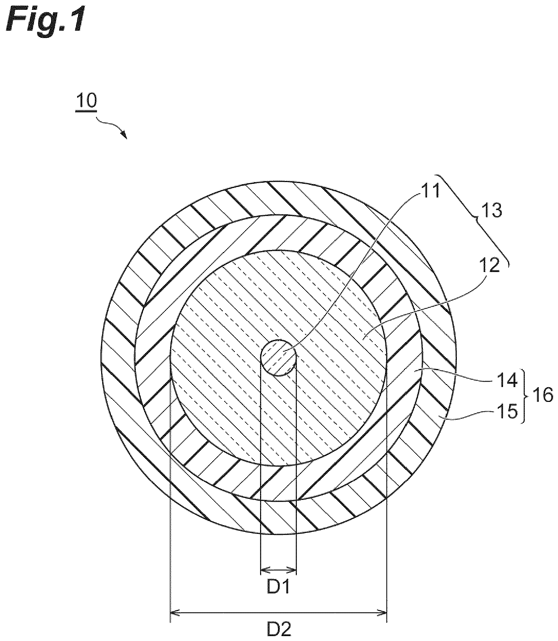

FIG. 1 is a schematic cross-section diagram showing an example of the optical fiber according to the present embodiment.

### Description of Embodiments

### [Problem to be solved by the present disclosure]

A coating resin layer typically comprises a primary resin layer and a secondary resin layer. The resin composition forming the secondary resin layer is required to improve the lateral pressure characteristics of the optical fiber by increasing the Young's modulus. However, when the content of the filler is increased, the Young's modulus of the resin layer formed from the resin composition can be increased, but the application property becomes poor and the resin layer tends to become brittle.

An object of the present disclosure is to provide: a resin composition having not only a high Young's modulus required for the secondary resin layer and but also excellent application property and allowing a tough resin layer to be formed; and an optical fiber comprising the secondary resin layer formed from the resin composition.

### [Advantageous effect of the present disclosure]

The present disclosure can provide: a resin composition for coating an optical fiber having not only a high Young's modulus required for a secondary resin layer and but also excellent application property and allowing a tough resin layer to be formed; and an optical fiber comprising the secondary resin layer formed from the resin composition.

### [Description of Embodiment of the Present Disclosure]

First, the contents of the embodiment of the present disclosure will be described by listing them. The resin composition according to one aspect of the present disclosure includes a base resin containing a urethane (meth)acrylate oligomer, a monomer, and a photopolymerization initiator, and surface-modified inorganic oxide particles, which are inorganic oxide particles, the surface of which is treated with a silane compound having an alkyl group having 1 or more and 8 or less carbon atoms or a phenyl group, wherein the content of the surface-modified inorganic oxide particles is 1% by mass or more and 60% by mass or less based on the total amount of the resin composition, and the amount of surface modification on the surface-modified inorganic oxide particles is 0.15 mg/m² or more, wherein the amount of surface modification is calculated from the specific surface area of the inorganic oxide particles and the ratio of the silane compound by the following formula: amount of surface modification (mg/m2) = ration of the silane compound / specific surface area of the inorganic oxide particles, wherein the ratio of the silane compound is measured by thermogravimetric/differential thermal analysis (TG/DTA) based on the weight change of the surface-modified inorganic oxide particles, and the specific surface area of the inorganic oxide particles is measured by a nitrogen absorption BET method.

Using the above surface-modified inorganic oxide particles in a specific range can form a tough resin layer having not only a high Young's modulus and but also excellent application property.

From the viewpoints of excellent dispersion property in the resin composition and thus easily improving application property, the amount of surface modification on the surface-modified inorganic oxide particles may be 0.15 mg/m² or more and 2.5 mg/m² or less.

The alkyl group having 1 or more and 8 or less carbon atoms may be at least one group selected from the group consisting of a methyl group, an ethyl group, a propyl group, a butyl group, a pentyl group, a hexyl group, and an octyl group. This makes it easier to form a resin layer having a high Young's modulus.

From the viewpoint of forming a resin layer having a high Young's modulus, the average primary particle size of the surface-modified inorganic oxide particles may be 800 nm or less.

The secondary coating material for optical fiber according to one aspect of the present disclosure includes the above resin composition. Using the resin composition according to the present embodiment for the secondary resin layer can produce an optical fiber being excellent in lateral pressure characteristics.

An optical fiber according to one aspect of the present disclosure comprises a glass fiber comprising a core and cladding, a primary resin layer contacting with the glass fiber and coating the glass fiber, and a secondary resin layer coating the primary resin layer, and the secondary resin layer comprises the cured product of the resin composition. The resin composition according to the present embodiment is applied to the secondary resin layer, allowing to improve the lateral pressure characteristics of the optical fiber.

A method for manufacturing the optical fiber according to one aspect of the present disclosure includes: an application step of applying the above resin composition to the outer periphery of a glass fiber composed of a core and a clad; and a curing step of curing the resin composition by irradiating with ultraviolet rays after the application step. This can manufacture an optical fiber having excellent lateral pressure characteristics.

### [Detail of Embodiment of the Present Disclosure]

Specific examples of a resin composition and an optical fiber according to embodiments of the present disclosure will be described referring to the drawing as necessary. The present invention is not limited to these illustrations but is indicated by the claims and intended to include meanings equivalent to the claims and all modifications within the claims. In the following description, the same reference numerals are given to the same elements in the description of the drawing, and redundant explanations are omitted.

### <Resin composition>

The resin composition according to the present embodiment includes a base resin containing a urethane (meth)acrylate oligomer, a monomer, and a photopolymerization initiator, and surface-modified inorganic oxide particles having an alkyl group having 1 or more and 8 or less carbon atoms or a phenyl group.

(Meth)acrylate means an acrylate or a methacrylate corresponding to it. The same applies to (meth)acrylic acid.

### (Surface-modified inorganic oxide particles)

For the surface-modified inorganic oxide particles according to the present embodiment, the surface of the inorganic oxide particles is treated with a silane compound having an alkyl group having 1 or more and 8 or less carbon atoms or a phenyl group, and the alkyl group having 1 or more and 8 or less carbon atoms or a phenyl group is introduced on the surface of the inorganic oxide particles. That is, the surface-modified inorganic oxide particles are composed of an inorganic component and an organic component.

The surface-modified inorganic oxide particles having an alkyl group having 1 or more and 8 or less carbon atoms or a phenyl group can enhance the compatibility with the base resin and easily form a resin layer having a high Young's modulus. On the other hand, surface-modified inorganic oxide particles having an alkyl group having 9 or more carbon atoms have high lipophilicity, and thus are difficult to disperse in the resin composition. The alkyl group having 1 or more and 8 or less carbon atoms may be at least one group selected from the group consisting of a methyl group, an ethyl group, a propyl group, a butyl group, a pentyl group, a hexyl group, and an octyl group.

Examples of the silane compound having an alkyl group having 1 or more and 8 or less carbon atoms include methyltrimethoxysilane, dimethyldimethoxysilane, ethyltrimethoxysilane, propyltrimethoxysilane, butyltrimethoxysilane, pentyltrimethoxysilane, hexyltrimethoxysilane, octyltrimethoxysilane, methyltriethoxysilane, dimethyldiethoxysilane, ethyltriethoxysilane, propyltriethoxysilane, butyltriethoxysilane, pentyltriethoxysilane, hexyltriethoxysilane, and octyltriethoxysilane.

Examples of the silane compound having a phenyl group include phenyltrimethoxysilane and phenyltriethoxysilane.

The surface-modified inorganic oxide particles according to the present embodiment are dispersed in a dispersion medium. Using the surface-modified inorganic oxide particles dispersed in the dispersion medium allows for uniform dispersion of the surface-modified inorganic oxide particles in the resin composition and then improvement of the storage stability of the resin composition. The dispersion medium is not particularly limited as long as curing of the resin composition is not obstructed. The dispersion medium may be reactive or non-reactive. When the dispersion medium including surface-modified inorganic oxide particles is observed by an X-ray small angle scattering method and no aggregated particles are observed, it can be said that the surface-modified inorganic oxide particles are dispersed as primary particles.

A monomer such as a (meth)acryloyl compound and an epoxy compound can be used as the reactive dispersion medium. Examples of the (meth)acryloyl compound include 1,6-hexanediol di(meth)acrylate, EO-modified bisphenol A di(meth)acrylate, polyethylene glycol di(meth)acrylate, PO-modified bisphenol A di(meth)acrylate, polypropylene glycol di(meth)acrylate, polytetramethylene glycol di(meth)acrylate, 2-hydroxy-3-phenoxypropyl (meth)acrylate, (meth)acrylic acid adduct of propylene glycol diglycidyl ether, (meth)acrylic acid adduct of tripropylene glycol diglycidyl ether, and (meth)acrylic acid adduct of glycerin diglycidyl ether. (Meth)acryloyl compounds exemplified for monomers described below may be used as the dispersion medium.

A ketone solvent such as methyl ethyl ketone (MEK), an alcohol solvent such as methanol (MeOH), propylene glycol monomethyl ether (PGME), or an ester solvent such as propylene glycol monomethyl ether acetate (PGMEA) can be used as the non-reactive dispersion medium. In the case of using the non-reactive dispersion medium, the resin composition may be prepared by mixing the base resin and the surface-modified inorganic oxide particles dispersed in the dispersion medium and removing a part of the dispersion medium.

Due to excellent dispersion properties in the resin composition and easy formation of a smooth resin layer, it is preferable that the surface-modified inorganic oxide particles are particles obtained by surface-treating at least one selected from the group consisting of silicon dioxide (silica), zirconium dioxide (zirconia), aluminum oxide (alumina), magnesium oxide (magnesia), titanium oxide (titania), tin oxide, and zinc oxide. From the view point of excellent inexpensiveness, easy surface treatment, permeability to ultraviolet ray, and easy provision of a resin layer with appropriate hardness, it is more preferable that the surface-modified silica particles be used as the surface-modified inorganic oxide particles according to the present embodiment.

From the viewpoint of increasing the Young's modulus of the resin layer, the average primary particle size of the surface-modified inorganic oxide particles may be 800 nm or less, preferably 1 nm or more and 650 nm or less, more preferably 5 nm or more and 500 nm or less, still more preferably 10 nm or more and 200 nm or less, and particularly preferably 10 nm or more and 100 nm or less. The average primary particle diameter can be measured with image analysis of electron microscope pictures, a light scattering method or a BET method, for example. The dispersion medium in which the primary particle of the surface-modified inorganic oxide particles is dispersed appears to be visually transparent when the diameter of the primary particle is small. When the diameter of the primary particle diameter is relatively large (40 nm or more), the dispersion medium in which the primary particle is dispersed appears to be clouded, but the precipitate is not observed.

The content of the surface-modified inorganic oxide particles is preferably 1% by mass or more and 60% by mass or less, preferably 3% by mass or more and 55% by mass or less, more preferably 5% by mass or more and 50% by mass or less, and still more preferably 10% by mass or more and 40% by mass or less, based on the total amount of the resin composition (total amount of the base resin and surface-modified inorganic oxide particles). The content of the surface-modified inorganic oxide particles is 1% by mass or more, allowing for easy formation of the resin layer with excellent lateral pressure characteristics. The content of the surface-modified inorganic oxide particles is 60% by mass or less, resulting in easy improvement in the application properties of the resin composition and thus allowing for formation of a tough resin layer. The total amount of the resin composition and the total amount of the cured product of the resin composition may be considered to be the same. The content of the surface-modified inorganic oxide particles is 1% by mass or more and 60% by mass or less, preferably 3% by mass or more and 55% by mass or less, more preferably 5% by mass or more and 50% by mass or less, and still more preferably 10% by mass or more and 40% by mass or less, based on the total amount of the secondary resin layer (the total amount of the cured resin composition constituting the secondary resin layer).

The amount of surface modification on the surface-modified inorganic oxide particles is 0.15 mg/m² or more, is preferably 0.15 mg/m² or more and 2.5 mg/m² or less, more preferably 0.20 mg/m² or more and 2.0 mg/m² or less, still more preferably 0.25 mg/m² or more and 1.8 mg/m² or less, and particularly preferably 0.30 mg/m² or more and 1.5 mg/m² or less. The amount of the surface modification is in the above range, allowing the viscosity of the resin composition to be easily adjusted.

"The amount of the surface modification" in the present description is calculated from the specific surface area of the surface-modified inorganic oxide particles and the ratio of the organic component. The organic component is a component derived from an ultraviolet curable functional group introduced into the inorganic oxide particles before surface modification. For example, when the surface-modified inorganic oxide particles are composed of silica particles, components other than SiO₂ are organic components. Specifically, the amount of surface modification is calculated from the specific surface area of the inorganic oxide particles and the ratio of the silane compound by the following formula:amount of surface modification (mg/m2) = ratio of the silane compound / specific surface area of the inorganic oxide particles.

The specific surface area of the inorganic oxide particles is measured by a nitrogen adsorption BET method, and the ratio of the organic component is measured by thermogravimetric/differential thermal analysis (TG/DTA) based on the weight change of the surface-modified inorganic oxide particles. The amount of surface modification on the surface-modified inorganic oxide particles may be measured by isolating the particles from the dispersion medium before preparing the resin composition, and may be measured by isolating the particles from the resin composition after preparing the resin composition.

### (Base resin)

The base resin according to the present embodiment contains a urethane (meth)acrylate oligomer, a monomer, and a photopolymerization initiator.

As the urethane (meth)acrylate oligomer, an oligomer obtained by reacting a polyol compound, a polyisocyanate compound, and a hydroxyl group-containing (meth)acrylate compound can be used.

Examples of the polyol compound include polytetramethylene glycol, polypropylene glycol and bisphenol A-ethylene oxide addition diol. Examples of the polyisocyanate compound includes 2,4-tolylene diisocyanate, 2,6-tolylene diisocyanate, isophorone diisocyanate, and dicyclohexylmethane 4,4'-diisocyanate. Examples of the hydroxyl group-containing (meth)acrylate compound include 2-hydroxyethyl (meth)acrylate, 2-hydroxybutyl (meth)acrylate, 1,6-hexanediol mono(meth)acrylate, pentaerythritol tri(meth)acrylate, 2-hydroxypropyl (meth)acrylate, and tripropylene glycol mono(meth)acrylate.

From the viewpoint of adjusting the Young's modulus of the resin layer, the number average molecular weight of the polyol compound may be 300 or more and 3000 or less.

As a catalyst for synthesizing a urethane (meth)acrylate oligomer, an organotin compound is generally used. Examples of the organotin compound include dibutyltin dilaurate, dibutyltin diacetate, dibutyltin maleate, dibutyltin bis(2-ethylhexyl mercaptoacetate), dibutyltin bis(isooctyl mercaptoacetate), and dibutyltin oxide. From the view point of easy availability or catalyst performance, it is preferable that dibutyltin dilaurate or dibutyltin diacetate be used as catalyst.

When the urethane (meth)acrylate oligomer is synthesized, lower alcohols having 5 or less carbon atoms may be used. Examples of the lower alcohols include methanol, ethanol, 1-propanol, 2-propanol, 1-butanol, 2-butanol, 2-methyl-2-propanol, 1-pentanol, 2-pentanol, 3-pentanol, 2-methyl-1-butanol, 3-methyl-1-butanol, 2-methyl-2-butanol, 3-methyl-2-butanol, and 2,2-dimethyl-1-propanol.

The resin composition according to the present embodiment may further contain an epoxy (meth)acrylate oligomer as an oligomer. As an epoxy (meth)acrylate oligomer, an oligomer obtained by reacting a compound having a (meth)acryloyl group with an epoxy resin having two or more glycidyl groups can be used.

A monofunctional monomer having one polymerizable group or a polyfunctional monomer having two or more polymerizable groups can be used as the monomer. The monomer may be used by mixing two or more monomers.

Examples of the monofunctional monomer include (meth)acrylate monomers such as methyl (meth)acrylate, ethyl (meth)acrylate, propyl (meth)acrylate, n-butyl (meth)acrylate, sec-butyl (meth)acrylate, tert-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, isodecyl (meth)acrylate, lauryl (meth)acrylate, 2-phenoxyethyl (meth)acrylate, 3-phenoxybenzyl acrylate, phenoxydiethylene glycol acrylate, phenoxy polyethylene glycol acrylate,4-tert-butylcyclohexanol acrylate, tetrahydrofurfuryl (meth)acrylate, benzyl (meth)acrylate, dicyclopentenyl (meth)acrylate, dicyclopentenyloxyethyl (meth)acrylate, dicyclopentanyl (meth)acrylate, nonylphenol polyethylene glycol (meth)acrylate, nonylphenoxy polyethylene glycol (meth)acrylate, and isobornyl (meth)acrylate; carboxyl group containing monomers such as (meth)acrylic acid, (meth)acrylic acid dimer, carboxyethyl (meth)acrylate, carboxypentyl (meth)acrylate, and ω-carboxy-polycaprolactone (meth)acrylate; heterocycle containing (meth)acrylates such as N-acryloylmorpholine, N-vinyl pyrrolidone, N-vinyl caprolactam, N-acryloylpiperidine, N-methacryloylpiperidine, N-acryloylpyrrolidine, 3-(3-pyridine) propyl (meth)acrylate, and cyclic trimethylolpropane formal acrylate; maleimide monomers such as maleimide, N-cyclohexyl maleimide, and N-phenyl maleimide; N-substituted amide monomers such as (meth)acrylamide, N, N-dimethyl (meth)acrylamide, N, N-diethyl (meth)acrylamide, N-hexyl (meth)acrylamide, N-methyl (meth)acrylamide, N-isopropyl (meth)acrylamide, N-butyl (meth)acrylamide, N-methylol (meth)acrylamide, and N-methylolpropane (meth)acrylamide; aminoalkyl (meth)acrylate monomers such as aminoethyl (meth)acrylate, aminopropyl (meth)acrylate, N, N-dimethylaminoethyl (meth)acrylate, and tert-butylaminoethyl (meth)acrylate; and succinimide monomers such as N-(meth)acryloyloxymethylene succinimide, N-(meth)acryloyl-6-oxyhexamethylene succinimide, and N- (meth)acryloyl-8-oxyoctamethylene succinimide.

Examples of the polyfunctional monomer include ethylene glycol di(meth)acrylate, polyethylene glycol di(meth)acrylate, polypropylene glycol di(meth)acrylate, neopentyl glycol di(meth)acrylate, tripropylene glycol di(meth)acrylate, di(meth)acrylate of alkylene oxide adduct of bisphenol A, tetraethylene glycol di(meth)acrylate, hydroxypivalic acid neopentyl glycol di(meth)acrylate, 1,4-butanediol di(meth)acrylate, 1,6-hexanediol di(meth)acrylate, 1,9-nonanediol di(meth)acrylate, 1,12-dodecanediol di(meth)acrylate, 1,14-tetradecanediol di(meth)acrylate, 1,16-hexadecanediol di(meth)acrylate, 1,20-eicosanediol di(meth)acrylate, isopentyl diol di(meth)acrylate, 3-ethyl-1, 8-octanediol di(meth)acrylate, EO adduct of bisphenol A di(meth)acrylate, trimethylol propane tri(meth)acrylate, trimethylol octane tri(meth)acrylate, trimethylol propane polyethoxy tri(meth)acrylate, trimethylol propane polypropoxy tri(meth)acrylate, trimethylol propane polyethoxy polypropoxy tri(meth)acrylate, tris[(meth)acryloyloxyethyl] isocyanurate, pentaerythritol tri(meth)acrylate, pentaerythritol polyethoxy tetra(meth)acrylate, pentaerythritol polypropoxy tetra(meth)acrylate, pentaerythritol tetra(meth)acrylate, ditrimethylol propane tetra(meth)acrylate, dipentaerythritol tetra(meth)acrylate, dipentaerythritol penta(meth)acrylate, dipentaerythritol hexa(meth)acrylate, and caprolactone-modified tris[(meth)acryloyloxyethyl] isocyanurate.

The photopolymerization initiator can be appropriately selected from known radical photopolymerization initiators and used. Examples of the photopolymerization initiator include 1-hydroxycyclohexyl phenyl ketone (Omnirad 184 manufactured by IGM Resins), 2,2-dimethoxy-2-phenylacetophenone, 1-(4-isopropylphenyl)-2-hydroxy-2-methylpropan-1-one, bis(2,6-dimethoxybenzoyl)-2,4,4-trimethylpentylphosphine oxide, 2-methyl-1-[4-(methylthio)phenyl]-2-morpholino-propan-1-one (Omnirad 907 manufactured by IGM Resins), 2,4,6-trimethylbenzoyldiphenylphosphine oxide (Omnirad TPO manufactured by IGM Resins), and bis(2,4,6-trimethylbenzoyl) phenylphosphine oxide (Omnirad 819, manufactured by IGM Resins).

The resin composition may further contain a silane coupling agent, a leveling agent, an antifoaming agent, an antioxidant, and the like.

The silane coupling agent is not particularly limited as long as it does not disturb curing of the resin composition. Examples of the silane coupling agent include tetramethyl silicate, tetraethyl silicate, mercaptopropyl trimethoxysilane, vinyltrichlorosilane, vinyltriethoxysilane, vinyltris(P-methoxy-ethoxy)silane, β-(3,4-epoxycyclohexyl)-ethyltrimethoxysilane, dimethoxydimethylsilane, diethoxydimethylsilane, 3-acryloxypropyltrimethoxysilane, γ-glycidoxypropyltnmethoxysilane, γ-glycidoxypropylmethyldiethoxysilane, γ-methacryloxypropyltnmethoxysilane, N-(β-aminoethyl)-γ-aminopropyltrimethoxysilane, N-(β-aminoethyl)-γ-aminopropyltrimethyldimethoxysilane, N-phenyl-γ-aminopropyltrimethoxysilane, γ-chloropropyltrimethoxysilane, γ-mercaptopropyltrimethoxysilane, γ-aminopropyltrimethoxysilane, bis-[3-(triethoxysilyl)propyl]tetrasulfide, bis-[3-(triethoxysilyl)propyl]disulfide, γ-trimethoxysilylpropyldimethylthiocarbamyl tetrasulfide, and γ-trimethoxysilylpropyl benzothiazyl tetrasulfide.

The viscosity of the resin composition according to the present embodiment is preferably 300 mPa·s or more and 5000 mPa·s or less, more preferably 400 mPa·s or more and 4500 mPa·s or less, still more preferably 500 mPa·s or more and 3500 mPa·s or less, particularly preferably 700 mPa·s or more and 3000 mPa·s or less at 45°C. The viscosity of the resin composition is in the above range, which can improve the application properties of the resin composition.

The resin composition according to the present embodiment can be suitably used as a primary coating material for an optical fiber. Using the resin composition according to the present embodiment for the secondary resin layer can produce an optical fiber having a high Young's modulus and being excellent in lateral pressure characteristics.

### <Optical fiber>

FIG. 1 is a schematic cross-section diagram showing an example of the optical fiber according to the present embodiment. The optical fiber 10 comprises the glass fiber 13 including the core 11 and the cladding 12, and the coating resin layer 16 including the primary resin layer 14 provided on the outer periphery of the glass fiber 13 and the secondary resin layer 15.

The cladding 12 surrounds the core 11. The core 11 and the cladding 12 mainly include glass such as silica glass, germanium-added silica glass can be used, for example, in the core 11, and pure silica glass or fluorine-added silica glass can be used in the cladding 12.

In FIG. 1, for example, the outside diameter (D2) of the glass fiber 13 is about 125 µm, and the diameter (D1) of the core 11 constituting the glass fiber 13 is about 7 to 15 µm.

The thickness of the coating resin layer 16 is typically about 60 to 70 µm. The thickness of each of the primary resin layer 14 and the secondary resin layer 15 may be about 10 to 50 µm, and for example, the thickness of the primary resin layer 14 may be 35 µm and the thickness of the secondary resin layer 15 may be 25 µm. The outside diameter of the optical fiber 10 may be about 245 to 265 µm.

The thickness of the coating resin layer 16 may be about 27 to 48 µm. Each layer thickness of the primary resin layer 14 and the secondary resin layer 15 may be about 10 to 38 µm, and for example, the thickness of the primary resin layer 14 may be 25 µm and the thickness of the secondary resin layer 15 may be 10 µm. The outside diameter of the optical fiber 10 may be about 179 to 221 µm.

Furthermore, the outside diameter (D2) of the glass fiber 13 may be about 100 µm, and the thickness of the coating resin layer 16 may be about 22 to 37 µm. Each layer thickness of the primary resin layer 14 and the secondary resin layer 15 may be about 5 to 32 µm, and for example, the thickness of the primary resin layer 14 may be 25 µm and the thickness of the secondary resin layer 15 may be 10 µm. The outside diameter of the optical fiber 10 may be about 144 to 174 µm.

The resin composition according to the present embodiment can be applied to the secondary resin layer. The secondary resin layer can be formed by curing a resin composition including the above base resin and surface-modified inorganic oxide particles. Accordingly, the lateral pressure characteristics of the optical fiber can be improved.

A method for manufacturing the optical fiber according to the present embodiment includes: an application step of applying the above resin composition to the outer periphery of a glass fiber composed of a core and a clad; and a curing step of curing the resin composition by irradiating with ultraviolet rays after the application step.

The Young's modulus of the secondary resin layer is preferably 1300 MPa or more at 23°C, more preferably 1300 MPa or more and 2600 MPa or less, and further preferably 1500 MPa or more and 2500 MPa or less. The Young's modulus of the secondary resin layer of 1300 MPa or more is easy to improve the lateral pressure characteristics, and the Young's modulus of 2600 MPa or less is hard to cause a crack or the like in the secondary resin layer due to provision of appropriate toughness with the secondary resin layer.

The surface-modified inorganic oxide particles dispersed in the dispersion medium remains to be dispersed in the resin layer after curing of the resin layer. When a reactive dispersion medium is used, the surface-modified inorganic oxide particles are mixed together with the dispersion medium into the resin composition and are incorporated in the resin layer with the dispersion condition maintained. When a non-reactive dispersion medium is used, at least a part of the dispersion medium evaporates and disappears from the resin composition, but the surface-modified inorganic oxide particles remain in the resin composition with the dispersion condition remained and also remain to be dispersed in the postcure resin layer. Electron microscope observation shows that the surface-modified inorganic oxide particles present in the resin layer are in the condition of dispersion of the primary particle.

The primary resin layer 14 can be formed by curing a resin composition including a urethane (meth)acrylate oligomer, a monomer, a photopolymerization initiator, and a silane coupling agent. Those of prior art can be used for the resin composition for the primary resin layer. A urethane (meth)acrylate oligomer, a monomer, a photopolymerization initiator, and a silane coupling agent may be appropriately selected from compounds exemplified in the above base resin. The resin composition forming the primary resin layer has a composition different from that of the base resin forming the secondary resin layer.

A plurality of optical fibers are juxtaposed and integrated with a resin for a ribbon to form an optical fiber ribbon, and the resin composition of the present disclosure can also be used as the resin for the ribbon. This can improve the lateral pressure characteristics of the optical fiber ribbon as in the case of the optical fiber.

### Examples

Hereinafter, the results of evaluation test using Examples and Comparative Examples according to the present disclosure will be shown, and the present disclosure is described in more detail. The present invention is not limited to these examples.

### [Preparation of resin composition]

### (Oligomer)

As the oligomer, a urethane acrylate oligomer obtained by reacting polypropylene glycol having a molecular weight of 600, 2,4-tolylene diisocyanate, and hydroxyethyl acrylate, and an epoxy acrylate oligomer were prepared.

### (Monomer)

As the monomer, isobornyl acrylate (trade name "IBXA" of Osaka Organic Chemical Industry Co., Ltd.), tripropylene glycol diacrylate (trade name "TPGDA" of DAICEL-ALLNEX LTD.), and 2-phenoxyethyl acrylate (trade name "Light Acrylate PO-A" of Kyoeisha Chemical Co., Ltd.) were prepared.

### (Photopolymerization initiator)

As the photopolymerization initiator, 1-hydroxycyclohexyl phenyl ketone and 2,4,6-trimethylbenzoyldiphenylphosphine oxide were prepared.

### (Base resin)

45 parts by mass of a urethane acrylate oligomer, 13.4 parts by mass of epoxy acrylate, 9 parts by mass of isobornyl acrylate, 22.5 parts by mass of tripropylene glycol diacrylate, 10 parts by mass of 2-phenoxyethyl acrylate, 0.05 parts by mass of 1-hydroxycyclohexylphenyl ketone, and 0.05 parts by mass of 2,4,6-trimethylbenzoyldiphenylphosphine oxide were mixed to prepare a base resin.

### (Surface-modified inorganic oxide particles)

As surface-modified inorganic oxide particles, a silica sol (MEK dispersion) including silica particles surface-treated with compounds shown in Table 1 (hereinafter, simply referred to as "silica particles") was prepared.

### (Examples 1 to 3 and Comparative Example 1)

After mixing a base resin and silica particles, the majority of MEK was removed to prepare a resin composition so that the content of the silica particles in the resin composition was values shown in Table 1.

### (Measurement of amount of surface modification)

Chloroform was added to a resin composition and centrifugation was performed to collect a precipitate. Acetone was added to the precipitate and centrifugation was performed to remove a supernatant, and then the operation of adding acetone to the precipitate again, centrifuging, and removing the supernatant was performed four times, and silica particles were taken out. The silica particles ground in a mortar were dried under reduced pressure at room temperature for 12 hours to remove volatile components. Centrifugation was performed in the condition of 30000 rpm for 120 minutes. The dried silica particles were subjected to a reduced pressure treatment at 80°C for 12 hours, and the specific surface area (m²/g) of the silica particles was measured by a nitrogen adsorption BET method using a pore distribution measuring device ("ASAP-2020" manufactured by Micromeritics).

The ratio (% by mass) of an organic component included in the silica particles was measured by using a simultaneous differential thermogravimetric analyzer ("TG/DTA6300" manufactured by Hitachi High-Tech Science Corporation). Measurement was performed by heating the weighed silica particles from room temperature to 850°C under nitrogen (300 mL/min), then cooling from 850°C to 200°C, and heating from 200°C to 1000°C under air (100 mL/min) to measure the weight change. The ratio of the organic component was calculated from the weight change of the silica particles.

The amount of surface modification of the silica particles was calculated from the specific surface area of the silica particles and the ratio of the organic component by the following formula:Amount of surface modification (mg/m2) = Ratio of organic component / Specific surface area.

### (Comparative Example 2)

Abase resin was used as a resin composition.

The following evaluation was performed by using the resin compositions obtained in Examples and Comparative Examples. The results are shown in Table 1. The resin composition in Comparative Example 1 failed to be evaluated due to poor dispersion property of silica particles.

### (Viscosity)

The viscosity at 45°C of the resin composition was measured by using a B type viscometer ("digital viscometer DV-II" manufactured by Brookfield Co., Ltd., spindle used: No. 18 and rotation speed: 10 rpm).

### (Young's modulus)

The resin composition obtained in Examples or Comparative Examples was applied onto a polyethylene terephthalate (PET) film by using a spin coater, and then cured by using an electrodeless UV lamp system ("VPS 600 (D valve)" manufactured by Heraeus) at a condition of 1000 ± 100 mJ/cm² to form a resin layer having a thickness of 200 ± 20 µm on the PET film. The resin layer was peeled off from the PET film to obtain a resin film.

A resin film was punched into a dumbbell shape of JIS K 7127 type 5 and pulled under a condition of 23 ± 2°C and 50 ± 10% RH using a tensile tester at a tension speed of 1 mm/min and a gauge length of 25 mm, and a stress-strain curve was obtained. Young's modulus was determined by 2.5% secant.

### (Production of optical fiber)

A urethane acrylate oligomer obtained by reacting polypropylene glycol having a molecular weight of 4000, isophorone diisocyanate, hydroxyethyl acrylate, and methanol was prepared. 75 parts by mass of a urethane acrylate oligomer, 12 parts by mass of a nonylphenol EO-modified acrylate, 6 parts by mass of N-vinylcaprolactam, 2 parts by mass of 1,6-hexanediol diacrylate, 1 part by mass of 2,4,6-trimethylbenzoyldiphenylphosphine oxide, and 1 part by mass of 3-mercaptopropyltrimethoxysilane were mixed to obtain a resin composition A1 for the primary resin layer.

The resin composition A1 was applied as the primary resin layer and the resin composition in Examples or Comparative Examples as the secondary resin layer on the outer periphery of a glass fiber with a diameter of 125 µm composed of a core and a clad, and then the resin composition was cured by irradiating with ultraviolet rays and a primary resin layer having a thickness of 35 µm and a secondary resin layer around the outer periphery thereof were formed to produce an optical fiber. A linear speed was 1500 m/min.

### (Application property)

For the produced optical fiber, the application properties of the resin composition were evaluated by confirming the presence or absence of a disconnection and cracking of the resin layer. The case where there was no disconnection and no crack in the resin layer was designated as "A", the case where there was a disconnection and there was no crack in the resin layer was designated as "B", and the case where there was a disconnection and a crack occurred in the resin layer was designated as "C". When the viscosity of the resin composition is too high, the coating diameter in forming the secondary resin layer is not stable, and disconnection is easy to occur. On the other hand, when the viscosity of the resin composition is too low, the self-aligning force is difficult to work and uneven thickness is easy to occur.

**[Table 1]**

| | Example 1 | Example 2 | Example 3 | Comparative Example 1 | Comparative Example 2 |
|---|---|---|---|---|---|
| Compound used for surface modification | Phenyltrimethoxy silane | Methyltriethoxy silane | Octyltriethoxy silane | Decyltrimethoxy silane | |
| Average primary particle size (nm) | 10-30 | 10-30 | 10-30 | 10-30 | - |
| Amount of surface modification (mg/m²) | 0.47 | 0.19 | 0.65 | 0.67 | - |
| Proportion of organic composition (% by mass) | 7 | 3 | 10 | 10 | - |
| Content of silica particles (% by mass) | 30 | 30 | 30 | 30 | - |
| Viscosity (mPa.s) | 1200 | 5000 | 1200 | - | 650 |
| Application property | A | B | A | - | A |
| Young's modulus | 1800 | 1900 | 1700 | - | 1000 |
| (MPa) | | | | | |

It was confirmed that the resin compositions in Examples had a high Young's modulus required for the secondary resin layer, had excellent application property, and could form a tough resin layer.

### Reference Signs List

10: Optical fiber, 11: Core, 12: Cladding, 13: Glass fiber, 14: Primary resin layer, 15: Secondary resin layer, 16: Coating resin layer.

## Claims

1. A resin composition for coating an optical fiber, comprising a base resin containing a urethane (meth)acrylate oligomer, a monomer, and a photopolymerization initiator; and surface-modified inorganic oxide particles, which are inorganic oxide particles, the surface of which is treated with a silane compound having an alkyl group having 1 or more and 8 or less carbon atoms or a phenyl group, wherein
a content of the surface-modified inorganic oxide particles is 1% by mass or more and 60% by mass or less based on a total amount of the resin composition and
an amount of surface modification on the surface-modified inorganic oxide particles is 0.15 mg/m² or more, wherein the amount of surface modification is calculated from the specific surface area of the inorganic oxide particles and the ratio of the silane compound by the following formula: amount of surface modification (mg/m2) = ratio of the silane compound / specific surface area of the inorganic oxide particles, wherein the ratio of the silane compound is measured by thermogravimetric/differential thermal analysis (TG/DTA) based on the weight change of the surface-modified inorganic oxide particles, and the specific surface area of the inorganic oxide particles is measured by a nitrogen absorption BET method.

2. The resin composition according to claim 1, wherein the amount of surface modification is 0.15 mg/m² or more and 2.5 mg/m² or less.

3. The resin composition according to claim 1 or claim 2, wherein the alkyl group is at least one group selected from the group consisting of a methyl group, an ethyl group, a propyl group, a butyl group, a pentyl group, a hexyl group, and an octyl group.

4. The resin composition according to any one of claim 1 to claim 3, wherein an average primary particle diameter of the surface-modified inorganic oxide particles is 800 nm or less, wherein the average primary particle diameter is measured with image analysis of electron microscope pictures, a light scattering method or a BET method.

5. The resin composition according to any one of claim 1 to claim 4, wherein a viscosity, measured at 45°C using a B type viscometer, is 300 mPa·s or more and 5000 mPa·s or less.

6. A secondary coating material for an optical fiber, comprising the resin composition according to any one of claim 1 to claim 5.

7. An optical fiber comprising:
a glass fiber comprising a core and cladding;
a primary resin layer contacting with the glass fiber and coating the glass fiber; and
a secondary resin layer coating the primary resin layer,
wherein the secondary resin layer comprises a cured product of the resin composition according to any one of claim 1 to claim 5.

8. A method for manufacturing an optical fiber, comprising:
an application step of applying the resin composition according to any one of claim 1 to claim 5 onto an outer periphery of a glass fiber comprising a core and a clad; and
a curing step of curing the resin composition by irradiating with ultraviolet rays after the application step.

## Patentansprüche

1. Harzzusammensetzung zum Beschichten einer optischen Faser, umfassend ein Basisharz enthaltend ein Urethan(meth)acrylat-Oligomer, ein Monomer und einen Photopolymerisationsinitiator; und oberflächenmodifizierte anorganische Oxidpartikel, die anorganische Oxidpartikel sind, deren Oberfläche behandelt ist mit einer Silanverbindung mit einer Alyklgruppe mit 1 oder mehr und 8 oder weniger Kohlenstoffatomen oder einer Phenylgruppe, wobei
ein Gehalt der oberflächenmodifizierten anorganischen Oxidpartikel 1 Massen-% oder mehr und 60 Massen-% oder weniger, bezogen auf eine Gesamtmenge der Harzzusammensetzung, beträgt und
eine Menge der Oberflächenmodifikation auf den oberflächenmodifizierten anorganischen Oxidpartikeln 0,15 mg/m² oder mehr beträgt, wobei die Menge der Oberflächenmodifikation aus der spezifischen Oberfläche der anorganischen Oxidpartikel und dem Verhältnis der Silanverbindung, durch die folgende Formel berechnet wird:Menge der Oberflächenmodifikation (mg/m2) = Verhältnis der Silanverbindung / spezifische Oberfläche der anorganischen Oxidpartikel,
wobei das Verhältnis der Silanverbindung gemessen wird durch thermogravimetrische/differentialThermoanalyse (thermogravimetric/differential thermal analysis; TG/DTA), bezogen auf die Gewichtsänderung der oberflächenmodifizierten anorganischen Oxidpartikel, und die spezifische Oberfläche der anorganischen Oxidpartikel wird gemessen durch ein Stickstoffabsorptions-BET-Verfahren (nitrogen absorption BET method).

2. Harzzusammensetzung gemäß Anspruch 1, wobei die Menge der Oberflächenmodifikation 0,15 mg/m² oder mehr und 2,5 mg/m² oder weniger beträgt.

3. Harzzusammensetzung gemäß Anspruch 1 oder Anspruch 2, wobei die Alkylgruppe mindestens eine Gruppe ist, ausgewählt aus der Gruppe, bestehend aus einer Methylgruppe, einer Ethylgruppe, einer Propylgruppe, einer Butylgruppe, einer Pentylgruppe, einer Hexylgruppe, und einer Octylgruppe.

4. Harzzusammensetzung gemäß mindestens einem der Ansprüche 1 bis 3, wobei ein durchschnittlicher primärer Partikeldurchmesser der oberflächenmodifizierten Oxidpartikel 800 nm oder weniger beträgt, wobei der durchschnittliche primäre Partikeldurchmesser gemessen wird durch Bildanalyse von elektronenmikroskopischen Aufnahmen, einem Lichtstreuverfahren oder einem BET-Verfahren.

5. Harzzusammensetzung gemäß mindestens einem der Ansprüche 1 bis 4, wobei eine Viskosität, gemessen bei 45 °C unter Verwendung eines Viskosimeters vom Typ B, 300 mPa-s oder mehr und 5000 mPa-s oder weniger beträgt.

6. Sekundäres Beschichtungsmaterial für eine optische Faser, umfassend die Harzzusammensetzung gemäß mindestens einem der Ansprüche 1 bis 5.

7. Optische Faser, umfassend:
eine Glasfaser umfassend einen Kern und eine Ummantelung;
eine primäre Harzschicht, die mit der Glasfaser in Kontakt steht und die Glasfaser beschichtet; und
eine sekundäre Harzschicht, die die primäre Harzschicht beschichtet,
wobei die sekundäre Harzschicht umfasst ein gehärtetes Produkt der Harzzusammensetzung gemäß mindestens einem der Ansprüche 1 bis 5.

8. Verfahren zur Herstellung einer optischen Faser, umfassend:
einen Aufbringungsschritt des Aufbringens der Harzzusammensetzung gemäß mindestens einem der Ansprüche 1 bis 5 auf einen Außenumfang einer Glasfaser umfassend einen Kern und eine Ummantelung; und
einen Aushärtungsschritt des Aushärtens der Harzzusammensetzung durch Bestrahlung mit ultravioletten Strahlen nach dem Aufbringungsschritt.

## Revendications

1. Composition de résine pour le revêtement d'une fibre optique, comprenant une résine de base contenant un oligomère de (méth)acrylate d'uréthane, un monomère, et un photoamorceur ; et des particules d'oxyde inorganique à surface modifiée, qui sont des particules d'oxyde inorganique, dont la surface est traitée avec un composé de silane présentant un groupe alkyle de 1 ou plus et de 8 ou moins d'atomes de carbone ou un groupe phényle, dans laquelle
une teneur des particules d'oxyde inorganique à surface modifiée est de 1 % en poids ou plus et de 60 % en poids ou moins sur la base d'une quantité totale de la composition de résine et
une quantité de surface modifiée sur les particules d'oxyde inorganique à surface modifiée est de 0,15 mg/m² ou plus, dans laquelle la quantité de surface modifiée est calculée à partir de la surface spécifique des particules d'oxyde inorganique et du taux du composé de silane par la formule suivante : quantité de surface modifiée (mg/m2) = taux du composé de silane/surface spécifique des particules d'oxyde inorganique,
dans laquelle le taux du composé de silane est mesuré par analyse thermogravimétrique/thermique différentielle (TG/ATD) sur la base du changement de poids des particules d'oxyde inorganique à surface modifiée, et la surface spécifique des particules d'oxyde inorganique est mesurée par un procédé BET d'absorption d'azote.

2. Composition de résine selon la revendication 1, dans laquelle la quantité de surface modifiée est de 0,15 mg/m² ou plus et de 2,5 mg/m² ou moins.

3. Composition de résine selon la revendication 1 ou la revendication 2, dans laquelle le groupe alkyle est au moins un groupe choisi dans le groupe constitué par un groupe méthyle, un groupe éthyle, un groupe propyle, un groupe butyle, un groupe pentyle, un groupe hexyle, et un groupe octyle.

4. Composition de résine selon l'une quelconque de la revendication 1 à la revendication 3, dans laquelle un diamètre de particule primaire moyen des particules d'oxyde inorganique à surface modifiée est de 800 nm ou moins, dans laquelle le diamètre de particule primaire moyen est mesuré par analyse d'images au microscope électronique, un procédé de diffusion de lumière ou un procédé BET.

5. Composition de résine selon l'une quelconque de la revendication 1 à la revendication 4, dans laquelle une viscosité, mesurée à 45 °C à l'aide d'un viscosimètre de type B, est de 300 mPa·s ou plus et de 5 000 mPa·s ou moins.

6. Matériau de revêtement secondaire pour une fibre optique, comprenant la composition de résine selon l'une quelconque de la revendication 1 à la revendication 5.

7. Fibre optique comprenant :
une fibre de verre comprenant un coeur et une gaine ;
une couche de résine primaire en contact avec la fibre de verre et revêtant la fibre de verre ; et
une couche de résine secondaire revêtant la couche de résine primaire,
dans laquelle la couche de résine secondaire comprend un produit durci de la composition de résine selon l'une quelconque de la revendication 1 à la revendication 5.

8. Procédé de fabrication d'une fibre optique, comprenant :
une étape d'application consistant à appliquer la composition de résine selon l'une quelconque de la revendication 1 à la revendication 5 sur une périphérie externe d'une fibre de verre comprenant un coeur et une gaine ; et
une étape de durcissement consistant à durcir la composition de résine par irradiation avec des rayons ultraviolets après l'étape d'application.
